# EUROPÄISCHE PATENTSCHRIFT

(11) **EP 1 044 879 B1**
(45) Veröffentlichungstag und Bekanntmachung des Hinweises auf die Patenterteilung: **07.08.2002**
(21) Anmeldenummer: 00104343.9
(22) Anmeldetag: 02.03.2000
(51) Int. Cl.: B64F 5/00

(54) **Enteisungsfahrzeug**
Deicing Vehicle
Véhicule de dégivrage

(30) Priorität: 02.03.1999 DE 29903718 U
(43) Veröffentlichungstag der Anmeldung: 18.10.2000
(73) Patentinhaber: DOLL FAHRZEUGBAU GMBH, D-77728 Oppenau (DE)
(72) Erfinder: Schmälzle, Friedrich, 77728 Oppenau (DE); Braun, Robert, 77728 Oppenau (DE)
(74) Vertreter: Alber, Norbert, Dipl.-Ing.

(56) Entgegenhaltungen:
- EP-A- 0 556 661
- US-A- 4 565 321
- US-A- 5 244 168
- US-A- 5 746 396

## Beschreibung

### I. Anwendungsgebiet

Die Erfindung betrifft ein Enteisungsfahrzeug, wie es auf Flughäfen zum Enteisen von Flugzeugen verwendet wird. Dabei ist in der Regel auf dem Rahmen eines Lkw Fahrgestells, seltener auf der Ladefläche eines Anhängers, eine Versorgungseinheit aufgebaut, die einen beziehungsweise mehrere Vorratsbehälter für Enteisungsflüssigkeit und/oder Wasser beziehungsweise deren Teilkomponenten enthält, sowie die notwendigen Aggregate wie Pumpen, Mischer und Antriebsaggregate für die Pumpen, sowie einen Auslegerarm. Der Auslegerarm ist hochschwenkbar gegenüber dem Fahrzeug, und trägt an seinem vorderen frei auskragenden eine Bedienerplattform oder -kabine. Dort wiederum ist ein Sprüharm meist als Teleskoparm ausgeführt, wiederum gelenkig und steuerbar durch den Bediener angeordnet, an dessen vorderen Ende die einen oder mehreren Düsen zum Ausbringen der Enteisungsflüssigkeit auf Rumpf und Tragflächen der Flugzeuge angeordnet sind.

Da der Bediener auf die zu enteisenden horizontalen Oberseiten des Flugzeugs insbesondere die Oberseiten der Tragflächen, bei der Enteisung Blickkontakt haben sollte, ist eine möglichst hohe erreichbare Position durch die Bedienerkabine anzustreben. Aus diesem Grund wird auch bereits der Auslegerarm an einem möglichst hochliegendem Punkt des Fahrzeuges gelagert, in der Regel auf oder oberhalb der Oberseite des Gehäuses der Versorgungseinheit.

### II. Technischer Hintergrund

Bekannt sind dabei Lösungen, in denen die Lagerung des Auslegerarmes im hinterem Bereich des Enteisungfahrzeuges geschieht, so daß in der Ruhelage, in der der Auslegerarm in die horizontale Lage herabgeklappt knapp oberhalb der Versorgungseinheit verläuft, von dieser Position aus die Bedienerkabine noch zusätzlich nach oben aufragt. Dadurch besitzt in dieser Ruhelage das Enteisungsfahrzeug jedoch eine Gesamthöhe bis zur Oberkante der Fahrerkabine, die deutlich größer ist, als die zulässige Gesamthöhe eines Fahrzeuges für den Straßenverkehr, und auch das Einfahren des Fahrzeuges durch Hallentore etc. auf Flughäfen häufig nicht zuläßt.

Aus diesem Grund ist es bereits bekannt, in diese Ruhelage die Bedienerkabine gegenüber dem sie tragendem Auslegerarm um eine horizontale Achse um etwa 180° Grad zu drehen, so daß die Bedienerkabine vom vorderem freiem des horizontal in der Ruhelage befindlichen Auslegerarmes nicht mehr nach oben aufragt, sondern nach unten herabhängt. Dies erfolgt entweder vor der Fahrerkabine des Fahrzeuges oder bei einer nur für einen Fahrer vorgesehenen seitlichen Fahrerkabine neben dieser Fahrerkabine.

Nachteilig ist dabei, daß die entsprechende Ansteuerungsmimik für die Bedienerkabine einen solchen Schwenk um 180° Grad überhaupt ermöglichen muß, was eine aufwendige Gestaltung der Mimik voraussetzt, und daß darüber hinaus durch das auf den Kopf stellen der Bedienerkabine sämtliche dort untergebrachten Teile befestigt sein müssen. Auch der Bediener darf in seiner Bedienerkabine nach Abschluß der Arbeiten und verlassen der Bedienerkabine keine lose herumliegenden Hilfsmittel dort belassen, da diese beim Schwenk um 180° Grad auf das dann unten liegende Dach der Bedienerkabine herabfallen und zerstört würden, beispielsweise Thermosflaschen, Handfunkgeräte etc., was dabei auch zu einer Zerstörung der in der Bedienerkabine fest montierten, meist elektrischen oder elektronischen, Steuerelemente führen kann.

Das US-Patent US 5,746,396, das diesseits als gattungsbildend angesehen wird, offenbart ein Enteisungsfahrzeug mit einem Auslegerarm, wobei nahe an seinem freien Ende eine Z-förmige Kröpfung, gebildet vom Parallelogramm 57 und von den Auslegerteilen 51, 61 und 62 vorgesehen ist. Diese Kröpfung ist in sich und relativ zum Auslegerarm verschwenkbar. An dem Auslegerteil 61 ist die Bedienerkabine 31 sowie ein Sprüharm 71 mit einer Düse 92 angeordnet. Über den Winkel, um den der Auslegerarm um die horizontale Achse 52 verschwenkbar ist, ist hier nichts offenbart. Der Auslegerarm ist im hinteren Fahrzeugbereich, in Fahrtrichtung gesehen, auf dem Fahrzeug angeordnet, so dass der Auslegerarm nach vorne weist.

Das US-Patent US 5,244,168 offenbart in Fig. 1 ein Enteisungsfahrzeug, bei dem der Auslegerarm 56 schwenkbeweglich im vorderen Bereich der Ladefläche des Fahrzeugs abgestützt ist und nach hinten weist.

Die europäische Offenlegungsschrift EP 0 556 661 A1 offenbart in den Fig. 1 und 2 eine Hubarbeitsbühne, bei der ein Teleskopmast 14 auf einem Fahrgestell 1 auf einem Drehkranz 7 gelagert ist. Der Arbeitskorb 12 ist an einem Z-förmig gekröpften Korbarm 15 gehaltert. Der Unterbau 1 ist als Anhänger, zum Anhängen an ein Zugfahrzeug ausgebildet. Der Teleskopmast 14 ist, in Draufsicht betrachtet, um 360° drehbar.

Das US-Patent US 4,565,321 offenbart ein Enteisungsfahrzeug mit einem Auslegerarm 5 der im hinteren Bereich der Ladefläche des Fahrzeugs schwenkbeweglich gelagert ist und nach vorne weist. An der Spitze des Auslegerarms 5 ist auf einem Drehkranz 15, 16 eine Kabine 3 für den Bediener drehbar angeordnet.

### III. Darstellung der Erfindung

### a) Technische Aufgabe

Dies ist daher die Aufgabe gemäß der vorliegenden Erfindung, ein Enteisungsfahrzeug zu schaffen, bei dem die am vorderen Ende des Auslegerarmes angeordnete Bedienerkabine trotz Erreichbarkeit der gleichen Maximalhöhe in der Ruhelage ohne 180° Grad Drehung der Bedienerkabine eine vertretbare Gesamthöhe des Fahrzeuges und eine verbesserte Zugänglichkeit der Bedienerkabine ergibt.

### b) Lösung der Aufgabe

Diese Aufgabe wird durch die Merkmale des Anspruches 1 gelöst. Vorteilhafte Ausführungsformen ergeben sich aus den Unteransprüchen. Durch die Kröpfung am vorderen Ende des Auslegerarmes findet die Bedienerkabine auch ohne 180° Grad Drehung gegenüber dem Auslegerarm in der Kröpfung teilweise Platz, und ragt daher nicht mehr vollständig, sondern höchstens noch teilweise in der Ruhelage über die Haupttraverse des gekröpften Auslegerarmes. Je nach Größe der Kröpfung und Höhe der Bedienerkabine kann dadurch erreicht werden, daß die Bedienerkabine auch in der Ruhelage des Auslegerarmes nicht über die höchsten Aufbauten des Fahrzeuges, insbesondere nicht über die höchsten Aufbauten auf der Oberseite der Versorgungseinheit, hochsteht und dadurch das vorgeschriebene Transitmaß eingehalten wird.

Dabei muß auf die weiteren Vorteile des Grundkonzepts eines solchen Enteisungsfahrzeuges nicht verzichtet werden, nämlich auf die hochliegende Lagerung des Auslegerarmes gegenüber dem Fahrzeugchassis, nämlich insbesondere auf der Oberseite der Versorgungseinheit oder auf einer äquivalenten Höhe.

Erfindungsgemäß ist die Schwenkachse des Auslegerarmes gegenüber dem Fahrzeug nicht im hinterem Bereich des Fahrzeuges anzuordnen, so daß in der Ruhelage die Bedienerkabine im Bereich der Fahrerkabine oder davor zu liegen kommt, sondern im vorderem Bereich, also auf oder knapp hinter der Fahrerkabine oder im vorderem Bereich auf der Versorgungseinheit. Dies bietet den Vorteil, daß die Schwenkachse in der Aufsicht betrachtet zwischen den Achsen des in der Regel mehrachsigen Fahrzeuges zu liegen kommt, und nicht außerhalb des Achsabstandes, wie bei Lagerung am hinteren Ende des Fahrzeuges. Der Freiraum für die in der Ruhelage des Auslegerarmes aufzunehmende Kröpfung des Auslegerarmes mit der Bedienerkabine wird in diesem Fall am heckseitigen Ende des Fahrzeuges geschaffen, in dem entweder die Versorgungseinheit nur bis zur in der Ruhelage abgelegten Kröpfung nach hinten reicht, oder zur Aufnahme eine entsprechende nach oben offene Absenkung in des Versorgungseinheit vorhanden ist.

Weiterhin ist der an der Bedienerkabine angeordnete Sprüharm, der wegen der erzielbaren Längen in der Regel als Teleskoparm ausgebildet ist, an einem hochliegendem Punkt der Bedienerkabine angeordnet, während die Lagerung der Bedienerkabine an dem sie tragendem Auslegerarm an einem tiefliegendem Punkt, also im Bodenbereich der Bedienerkabine, erfolgt.

Der Höhenabstand dieser beiden Schwenkachsen bezüglich der - in allen Positionen gerade gehaltenen Bedienerkabine - soll dabei so groß sein, daß in der Ruhelage der Sprüharm bzw. Teleskoparm von der Bedienerkabine aus horizontal oder flach schräg ansteigend nach vorne verlaufen kann, ohne mit der Oberkante der Versorgungseinheit zu kollidieren. Dadurch kann selbst bei Ausbildung als Teleskoparm bereits eine Grundlänge des Teleskoparmes, also im zusammengeschobenem Zustand, erzielt werden, die maximal etwa der gesamten Fahrzeuglänge entspricht. Dadurch kann eine vorgegebene maximale Auszugslänge mit weniger Teleskopteilen, also nur drei oder gar nur zwei Teleskopelementen erreicht werden, was den mechanischen Bauaufwand und auch das Gewicht des Teleskoparmes senkt. Wegen der erzielbaren sehr großen Maximallängen stellt gerade das Gewicht des Teleskoparmes ein großes Problem dar, weshalb erhebliche Anstrengungen unternommen wurden, um diesen Teleskoparm aus Leichtbaumaterialien, wie aus Kohlefasern gewickelten Kunststoffrohren oder hochfesten gekanteten Stahlblechen etc., zu erstellen.

Durch Reduzierung der Teleskopelemente ist hier ein Rückgriff auf einfachere Konstruktionen wie Aluminiumrohre etc. möglich. Zusätzlich zu den vorbeschriebenen Schwenkbewegungen der einzelnen Komponenten zueinander um horizontale Achsen sind auch Schwenkbewegungen um wenigstens ein vertikale Achse möglich, in der Regel zwischen der Bedienerkabine und dem sie tragendem Auslegerarm und/ oder dem Auslegerarm und dem Fahrzeug (z. B. Drehkranz).

### c) Ausführungsbeispiele

Eine Ausführungsform gemäß der Erfindung ist im folgendem anhand der Figuren beispielhaft näher beschrieben.

Es zeigen:
- Fig. 1:: das erfindungsgemäß Enteisungsfahrzeug in Ruhelage in der Seitenansicht;
- Fig. 2:: das Fahrzeug der Fig. 1 mit der Bedienerkabine in Maximalhöhe und
- Fig. 3:: das Fahrzeug gemäß Fig. 1 mit Bedienerkabine an der vordersten Position bezüglich des Fahrzeuges, sowie
- Fig. 4:: eine Aufsicht auf die Darstellung gemäß Fig. 1.

In allen Darstellung sind die Relativbewegungen der einzelnen Komponenten zueinander, also Auslegerarm 5 zum Fahrzeug 1 bzw. Bedienerkabine 6 zum Auslegerarm 5 und Teleskoparm 7 zur Bedienerkabine 6 bewirkenden Verstellelemente, in der Regel Hydraulikzylinder, aus Gründen der Übersichtlichkeit nicht dargestellt.

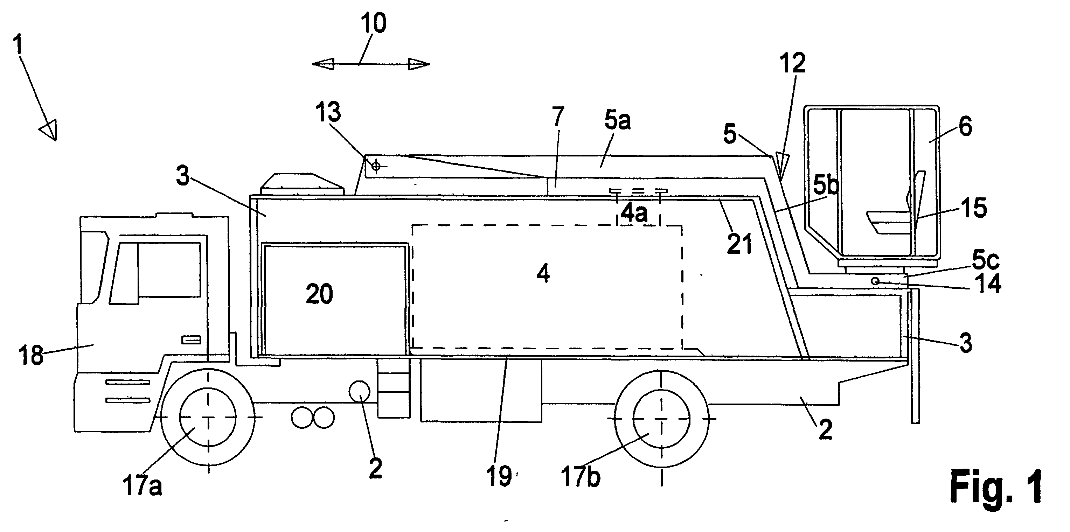

Fig. 1 zeigt das erfindungsgemäße Enteisungsfahrzeug in der sogenannten Ruhelage, in der der Auslegerarm 5 und auch der daran befestigte Teleskoparm 7 auf das Fahrzeug so weit wie möglich herunter geklappt sind, so daß das Fahrzeug eine möglichst geringe Gesamthöhe besitzt, und in dieser Ruhelage durch Halleneinfahrten etc. gefahren werden kann, und nach Möglichkeit auch auf öffentlichen Straßen, indem es die dort vorgeschriebene Gesamthöhe nicht überschreitet (Transitmaß).

Auf dem Rahmen 19 des Fahrgestells 2 des Fahrzeuges 1, welches im vorderem Bereich die Fahrerkabine 18 trägt und an dem die Räder 17a der Vorderachse und 17b der Hinterachse befestigt sind, ist die sogenannte Versorgungseinheit 3 fest aufgebaut. Diese besteht aus einem Gehäuse, in dessen Inneren einerseits ein oder mehrere Vorratsbehälter 4 für die über die Düse 11 auszubringende Enteisungsflüssigkeit bzw. deren Komponenten angeordnet ist, und welcher über einen bis über die Oberseite 21 des Gehäuses der Versorgungseinheit 3 aufragenden Mannloch 4a verfügt.

Daneben sind alle weiteren notwendigen Aggregate, sofern sie nicht nahe an der Düse angeordnet werden müssen, in dieser Versorgungseinheit 3 untergebracht, beispielsweise die Pumpe 20, gegebenenfalls die Pumpe 20 antreibende Aggregate, wie Zusatzmotoren, darüber hinaus Mischer und die diese Einheiten verbindenden Rohrleitungen.

Gegenüber diesen festen Teilen des Fahrzeuges 1 ist der Auslegerarm 5 und alle von ihm getragenen Teile beweglich befestigt, nämlich um eine horizontale Schwenkachse 13, die quer zur Fahrtrichtung 10 des Fahrzeuges verläuft, in einem Lagerbock, der sich auf der Oberseite 21 der Versorgungseinheit 3 befindet.

Die Schwenkachse 13 befindet sich dabei über dem vorderem Bereich der Versorgungseinheit, und damit in der Mitte oder noch vor der Mitte zwischen Vorderachse und Hinterachse.

Der Auslegerarm 5 verläuft von der Schwenkachse 13 aus in seiner in Fig. 1 dargestellten Ruhelage horizontal nach hinten, und weist in seinem Verlauf eine in der Seitenansicht erkennbare Z-förmige Kröpfung 12 nahe seines freien, der Schwenkachse 13 gegenüberliegenden, Endes auf. Diese Kröpfung 12 wird gebildet durch die von der Schwenkachse 13 etwa horizontal und parallel zur Oberseite 21 der Versorgungseinheit 3 nach hinten verlaufende Haupttraverse 5a, die von deren freien Ende unter einem Zwischenwinkel von 90° Grad oder etwas mehr schräg nach unten verlaufende Quertraverse 5b und die von deren Ende wiederum nach hinten horizontal wegführende Endtraverse 5c, die alle drei fest miteinander verbunden, insbesondere miteinander verschweißt sind und aus Metallprofilen, meist geschlossenen Rohrprofilen, bestehen.

Dadurch liegt die Endtraverse 5c gegenüber der Haupttraverse 5a in der Ruhelage deutlich tiefer.

Zur Aufnahme dieser Kröpfung 12 fällt die Oberseite 21 der Versorgungseinheit 3 ebenfalls in ihrem hinteren Bereich entsprechend nach unten ab und bildet dort einen Sattel, der sich vorzugsweise über die gesamte Breite der Versorgungseinheit 3 erstreckt, wie vorzugsweise in der Aufsicht der Fig. 4 dargestellt.

Es ist jedoch auch möglich, diesen Absatz nur so breit auszuführen, daß die Kröpfung 12 des Auslegerarmes 5 und die in dieser Kröpfung untergebrachte Bedienerkabine 6 darin Platz finden. Sowohl die Versorgungseinheit 3 als auch der Auslegerarm 5 und / oder die Bedienerkabine 6 ragen über das hintere Ende des Fahrgestells 2 nicht oder nur geringfügig hinaus.

Die Bedienerkabine 6, in der beim Enteisen der Bediener sitzt, ist gegenüber dem freien Endbereich der Endtraverse 5c des Auslegerarmes 5 wiederum um eine horizontale, quer verlaufende Schwenkachse 14 gelagert und wird dort durch entsprechende nicht näher dargestellte Mechanismen immer in einer aufrechten Position, also mit dem Boden der Bedienerkabine etwa parallel zum Untergrund gehalten.

In der in Fig. 1 dargestellten Ruhelage verläuft der Boden der Bedienerkabine 6 damit etwa parallel zur Quertraverse 5c.

Die Bedienerkabine 6 weist - in der Seitenansicht betrachtet - eine Breite auf, die gleich oder etwas größer als die Erstreckung der Endtraverse 5c ist, sowie eine Höhe, die gleich oder etwas höher als die Höhe der Quertraverse 5b in der Ruhelage, also der Parallelversatz von Haupttraverse 5a zu Endtraverse 5c ist.

Dabei ist in aller Regel die Oberkante der Bedienerkabine 6 in dieser Ruhelage das am weitesten nach oben aufragende Bauteil, und die Dimensionen sowohl der Kröpfung als auch der Bedienerkabine 6 sind dabei so zu wählen, daß die gewünschte Gesamthöhe des Fahrzeuges, insbesondere die für die Benutzung von Fahrzeugen im öffentlichem Straßenverkehr vorgegebene Maximalhöhe, nicht überschritten wird.

Zusätzlich ist die Bedienerkabine 6 gegenüber der sie tragenden Quertraverse 5b des Auslegerarmes 5 auch um eine vertikale Schwenkachse verdrehbar.

An der Bedienerkabine 6 ist weiterhin ein Teleskoparm 7 mit seinem hinteren Ende wiederum um einen horizontale Schwenkachse 15 schwenkbar befestigt, von der aus der mehrteilige Teleskoparm 7 nach vome verläuft und dabei horizontal oder nur leicht schräg ansteigend - in der Seitenansicht betrachtet - liegt.

Wie die Aufsicht der Fig. 4 zeigt, ist der Teleskoparm 7 dabei seitlich an der Bedienerkabine 6 schwenkbar befestigt, während der Auslegerarm 5 etwa unter der Mitte der Bedienerkabine 6 verläuft. Dadurch liegt in der Ruhelage der Fig. 1 der Teleskoparm 7 seitlich neben dem Auslegerarm 5.

Die Schwenkachse 15 des Teleskoparmes 7 liegt gegenüber der Schwenkachse 14 zwischen Bedienerkabine 6 und Auslegerarm 5 deutlich höher, so daß in der Ruhelage, also beim Ablegen des Teleskoparmes 7 auf der Oberseite 21 der Versorgungseinheit 3 das vordere, freie Ende des Teleskoparmes 7 einschließlich der dort angebrachten eine oder mehreren Düsen 11 trotz Schrägstellung nicht über den höchsten sonstigen Punkt des Fahrzeuges 1 aufragt, insbesondere nicht über die Höhe der Oberkante der Bedienerkabine 6 und nicht über die Oberkante des Auslegerarmes 5.

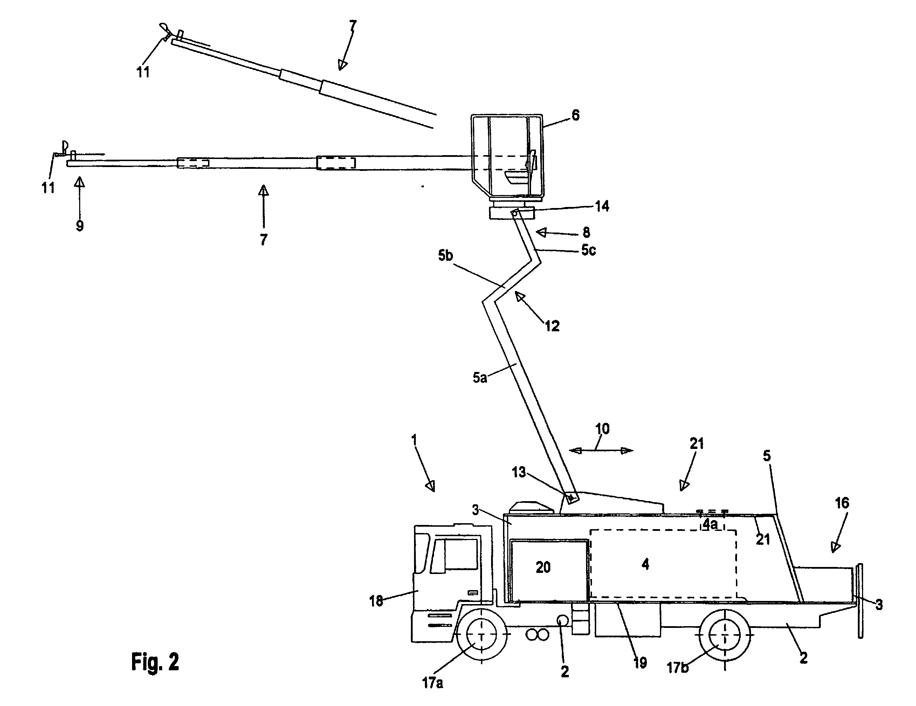

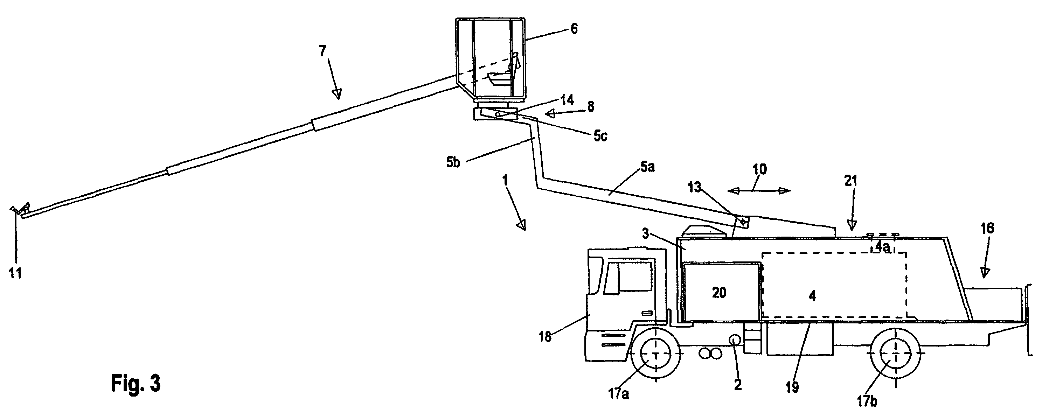

Die Fig. 2 und 3 zeigen den Auslegerarm 5 in unterschiedlichen Arbeitspositionen.

Wie in Fig. 2 befindet sich die Bedienerkabine 6, die bei Verschwenken des Auslegerarmes 5 gegenüber der Ruhelage der Fig. 1 gegen den Uhrzeigersinn eine bogenförmige Bewegung durchführt, am höchsten vergleichbaren Punkt, und dabei etwa oberhalb der Schwenkachse 13 des Auslegerarmes 5 gegenüber dem Fahrzeug 1.

Bei dieser maximalen Höhenlage der Bedienerkabine 6 liegen die zu enteisenden Flächen dem gegenüber in der Regel relativ niedrig, so daß der Teleskoparm 7, der dann - im Gegensatz zur Ruhelage der Fig. 1 - ganz oder teilweise ausgefahren ist, schräg nach unten weist.

Fig. 3 zeigt den Schwenkarm 5 in einer typischen Arbeitsstellung, in der der Schwenkarm 5 um mehr als 90° Grad, annähernd 15° Grad, gegenüber der Ansicht der Fig. 1 nach oben vorne geschwenkt ist, so daß sich die Bedienerkabine 6 zwar an einem niedrigerem Punkt als der Lage der Fig. 2 befindet, jedoch in Fahrtrichtung betrachtet vor der Fahrerkabine 18 und damit vor dem vorderem Ende des festen Teils des Aufbaus des Fahrzeuges 1. Auf diese Art und Weise kann die Bedienerkabine 6 unmittelbar über zu enteisende Flächen, beispielsweise die Tragflächen eines Flugzeuges, positioniert werden und damit eine optimale Einsehbarkeit der Arbeitsstelle erreicht werden. Je nach deren Lage bezüglich der Bedienerkabine richtet sich dabei die Schwenkstellung des Teleskoparmes 7 bezüglich der Bedienerkabine ein, als auch die Ausfahrlänge des Teleskoparmes 7.

### BEZUGSZEICHENLISTE

- 1: Fahrzeug
- 2: Fahrgestell
- 3: Versorgungseinheit
- 4: Vorratsbehälter
- 5: Auslegerarm
- 5a: Haupttraverse
- 5b: Quertraverse
- 5c: Endtraverse
- 6: Bedienerkabine
- 7: Teleskoparm
- 8: freies Ende
- 9: freies Ende
- 10: Fahrtrichtung
- 11: Düse
- 12: Kröpfung
- 13: Schwenkachse
- 14: Schwenkachse
- 15: Schwenkachse
- 16: Absenkung
- 17: Rad
- 18: Fahrerkabine
- 19: Ladefläche
- 20: Pumpe
- 21: Oberseite

## Patentansprüche

1. Enteisungsfahrzeug mit
- einem Fahrgestell (2),
- einer auf dem Fahrgestell (2) aufgesetzten Versorgungseinheit (3), welche den Vorratsbehälter (4) für die wenigstens eine Enteisungsflüssigkeit und die Pumpe hierfür umfaßt,
- einem hochschwenkbar am Fahrzeug (1) befestigten Auslegerarm (5), an dessen frei auskragendem Ende (8) eine Bedienerkabine (6) angeordnet ist,
- einem am freien Ende (8) des Auslegerarmes (5) beweglich befestigten Sprüharm, an dessen vorderem Ende wenigstens eine Düse (11) zum Ausbringen der Enteisungsflüssigkeit angeordnet ist, wobei
der Auslegerarm (5) nahe an seinem freien Ende (8) eine Z-förmige Kröpfung (12) aufweist, so daß in der Ruhelage, in der der Auslegerarm (5) auf dem Fahrzeug (1) abgelegt ist, die Endtraverse (5c) der Kröpfung (12) gegenüber der Haupttraverse (5a), mit der sie über die Quertraverse (5b) verbunden ist, tiefer liegt,
**dadurch gekennzeichnet, daß**
- die Haupttraverse (5a), die Quertraverse (5b) und die Endtraverse (5c) fest miteinander verbunden sind,
- die Schwenkachse (13) im vorderen Bereich der Ladefläche, insbesondere im vorderen Bereich der Versorgungseinheit (3) und insbesondere möglichst niedrig über der Oberseite der Versorgungseinheit (3) angeordnet ist, und
- der Schwenkarm (5) um mehr als 90° um eine horizontale Schwenkachse (13) verschwenkbar ist.

2. Enteisungsfahrzeug nach Anspruch 1,
**dadurch gekennzeichnet, daß**
der Auslegerarm (5) gegenüber dem Fahrzeug (1) auf wenigstens der Höhe der Oberseite der Versorgungseinheit (3), insbesondere auf der Oberseite der Versorgungseinheit (3) um eine horizontale Schwenkachse (13) hochschwenkbar gelagert ist.

3. Enteisungsfahrzeug nach einem der vorhergehenden Ansprüche,
**dadurch gekennzeichnet, daß**
die Versorgungseinheit (3) in ihrem hinteren Endbereich eine nach oben offen Absenkung (16) zur Aufnahme der Kröpfung (12) des Auslegerarmes (5) mit der darin angeordneten Bedienerkabine (6) aufweist.

4. Enteisungsfahrzeug nach einem der vorhergehenden Ansprüche,
**dadurch gekennzeichnet, daß**
die Bedienerkabine (6) gegenüber dem freien Ende (8) des Auslegerarmes (5) wenigstens um eine horizontale Schwenkachse (14) verschwenkbar ist und insbesondere über eine Stelleinrichtung automatisch und unabhängig von der Stellung des Auslegerarmes (5) immer in einer horizontalen Lage, also mit dem Boden der Bedienerkabine (6) in Horizontallage, gehalten wird.

5. Enteisungsfahrzeug nach einem der vorhergehenden Ansprüche,
**dadurch gekennzeichnet, daß**
der Sprüharm ein Teleskoparm (7) ist, der insbesondere im zusammengeschobenen Zustand eine Länge aufweist, die größer ist als die Längserstreckung der Endtraverse (5c) des Auslegerarmes (5) und insbesondere kleiner als die Längserstreckung des gesamten Auslegerarmes (5) gemessen in Richtung dessen Haupttraverse (5a).

6. Enteisungsfahrzeug nach einem der vorhergehenden Ansprüche,
**dadurch gekennzeichnet, daß**
der Sprüharm, insbesondere Teleskoparm (7), gegenüber der Bedienerkabine (6) wenigstens um eine horizontale Schwenkachse (15) verschwenkbar ist, die gegenüber der Schwenkachse (14) zwischen Bedienerkabine (6) und Auslegerarm (5) soweit höher liegt, daß in der Ruhelage, in der die Haupttraverse (5a) im wesentlichen horizontal oberhalb der Oberseite der Versorgungseinheit (3) verläuft, auch der Sprüharm, insbesondere Teleskoparm (7), von seinem Lagerungspunkt aus im wesentlichen horizontal oberhalb der Versorgungseinheit (3) verlaufen kann.

7. Enteisungsfahrzeug nach einem der vorhergehenden Ansprüche,
**dadurch gekennzeichnet, daß**
das Fahrzeug (1) ein mehrachsiges Fahrzeug ist und die Schwenkachse (13) des Auslegerarmes (5) gegenüber dem Fahrzeug (1) in der Aufsicht betrachtet zwischen den Achsen positioniert ist.

8. Enteisungsfahrzeug nach einem der vorhergehenden Ansprüche,
**dadurch gekennzeichnet, daß**
der Versatz der etwa parallel zueinander verlaufenden Haupttraverse (5a) und Endtraverse (5c) des Auslegerarmes (5) so groß ist, daß in der Ruhelage die von der Endtraverse (5c) aufragende Bedienerkabine (6) nicht über die höchsten festmontierten Aufbauten auf der Oberseite der Versorgungseinheit (3) aufragt.

9. Enteisungsfahrzeug nach einem der vorhergehenden Ansprüche,
**dadurch gekennzeichnet, daß**
der Sprüharm, insbesondere Teleskoparm (7) in der Aufsicht betrachtet seitlich versetzt zum Auslegerarm (5) an der Bedienerkabine (6) befestigt ist, so daß in der Ruhelage der Sprüharm, insbesondere Teleskoparm (7), seitlich versetzt zur Haupttraverse (5a) des Auslegerarmes (5) liegt.

## Claims

1. Deicing vehicle comprising
- a chassis (2),
- a supply unit (3) set on the chassis (2), which includes the supply container (4) for the at least one deicing fluid and the pump for it,
- a cantilever arm (5) mounted on the vehicle (1) in an upward pivotable manner, at whose freely projecting end (8) an operating cabin (6) is arranged,
- a spray arm movably mounted on the free end (8) of the cantilever arm (5), at whose front end at least one nozzle (11) is arranged for applying the deicing fluid, wherein
the cantilever arm (5) has a Z-shaped offset (12) near its free end (8) so that in the rest position, in which the cantilever arm (5) is rested on the vehicle (1), the end traverse (5c) of the offset (12) lies deeper with respect to the main traverse (5a) with which said end traverse is connected via the cross-traverse (5b),
**characterized in that**
- the main traverse (5a), the cross-traverse (5b) and the end traverse (5c) are rigidly connected to each other,
- the pivot axis (13) is arranged in the front area of the loading surface, in particular in the front area of the supply unit (3) and in particular as low as possible above the top of the supply unit (3), and
- the cantilever arm (5) can be pivoted by more than 90° about a horizontal pivot axis (13).

2. Deicing vehicle according to claim 1,
**characterized in that**
with respect to the vehicle (1) the cantilever arm (5) is supported in an upward pivotable manner about a horizontal pivot axis (13) on at least the level of the top of the supply unit (3), in particular on the top of the supply unit (3).

3. Deicing vehicle according to any one of the preceding claims,
**characterized in that**
the supply unit (3) has in its rear end area a recess (16) that is open towards the top for receiving the offset (12) of the cantilever arm (5) with the operating cabin (6) arranged therein.

4. Deicing vehicle according to any one of the preceding claims,
**characterized in that**
the operating cabin (6) can be pivoted at least about a horizontal pivot axis (14) with respect to the free end (8) of the cantilever arm (5) and **in that** particularly by means of an adjusting device said operating cabin is always kept in a horizontal position automatically and independently of the position of the cantilever arm (5), i.e. in a horizontal position with the base of the operating cabin (6).

5. Deicing vehicle according to any one of the preceding claims
**characterized in that**
the spray arm is a telescopic arm (7), which has a length particularly in the retracted position that is larger than the longitudinal extension of the end traverse (5c) of the cantilever arm (5) and in particular smaller than the longitudinal extension of the entire cantilever arm (5) as measured in the direction of its main traverse (5a).

6. Deicing vehicle according to any one of the preceding claims,
**characterized in that**
the spray arm, in particular the telescopic arm (7), can be pivoted with respect to the operating cabin (6) at least about a horizontal pivot axis (15), which is positioned higher to such an amount with respect to the pivot axis (14) between the operating cabin (6) and the cantilever arm (5) that in the rest position, in which the main traverse (5a) extends substantially horizontally above the top of the supply unit (3), the spray arm, in particular the telescopic arm (7), can also extend from its point of support substantially horizontally above the supply unit (3).

7. Deicing vehicle according to any one of the preceding claims,
**characterized in that**
the vehicle (1) is a multiple-axle vehicle and **in that** the pivot axis (13) of the cantilever arm (5) is positioned between the axes with respect to the vehicle (1) as seen in top view.

8. Deicing vehicle according to any one of the preceding claims,
**characterized in that**
the offset of the approximately parallel extending main traverse (5a) and end traverse (5c) of the cantilever arm (5) is dimensioned such that in the rest position the operating cabin (6) that projects upwards from the end traverse (5c) does not project beyond the highest fixedly mounted structures on the top of the supply unit (3).

9. Deicing vehicle according to any one of the preceding claims,
**characterized in that**
seen in top view the spray arm, in particular the telescopic arm (7), is mounted on the operating cabin (6) in a laterally offset manner to the cantilever arm (5) so that in the rest position the spray arm, in particular the telescopic arm (7), lies laterally offset to the main traverse (5a) of the cantilever arm (5).

## Revendications

1. Véhicule de dégivrage, comprenant
- un bogie (2)
- une unité d'alimentation (3) positionnée sur le bogie (2), laquelle comprend le réservoir (4) pour le liquide de dégivrage et la pompe,
- un bras à flèche (5) fixé de manière pivotante sur le véhicule (1), bras à l'extrémité en porte-à-faux (8) duquel est disposée une cabine de pilotage (6),
un bras de pulvérisation fixée mobile à l'extrémité libre (8) du bras à flèche (5), bras à l'extrémité avant duquel est disposée au moins une buse (11) pour l'application du liquide de dégivrage,
le bras à flèche (5) présentant près de son extrémité libre (8) un coude (12) en forme de Z, de sorte qu'en position de repos, dans laquelle le bras à flèche (5) est déposé sur le véhicule (1), la traverse d'extrémité (5c) du coude (12) est plus basse par rapport à la traverse principale (5a) à laquelle elle est reliée par la traverse transversale (5b), **caractérisé en ce que**
- la traverse principale (5a), la traverse transversale (5b) et la traverse d'extrémité (5c) sont reliées fixement entre elles,
- l'axe de pivotement (13) est disposé dans la zone avant de la surface de chargement, en particulier dans la surface avant de l'unité d'alimentation (3) et en particulier le plus bas possible au-dessus de la face supérieure de l'unité d'alimentation (3) et
- le bras pivotant (5) peut basculer sur plus de 90° autour d'un axe de pivotement horizontal (13).

2. Véhicule de dégivrage selon la revendication 1, **caractérisé en ce que**
le bras à flèche (5) est logé de manière à pivoter vers le haut par rapport au véhicule (1) au moins à la hauteur de la face supérieure de l'unité d'alimentation (3) en particulier sur la face supérieure de l'unité d'alimentation (3), et ce, autour d'un axe de pivotement horizontal (13).

3. Véhicule de dégivrage selon l'une des revendications précédentes, **caractérisé en ce que**
l'unité d'alimentation (3) présente, dans sa zone arrière d'extrémité, un creux (16) ouvert vers le haut pour le logement du coude (12) du bras à flèche (5) portant la cabine de pilotage (6).

4. Véhicule de dégivrage selon l'une des revendications précédentes, **caractérisé en ce que** la cabine de pilotage (6) est pivotante au moins autour d'un axe de pivotement horizontal (14) par rapport à l'extrémité libre (8) du bras en flèche (5) et est maintenue toujours dans une position horizontale, à savoir avec le fond de la cabine de pilotage (6) à la position horizontale en particulier par un dispositif de réglage et indépendamment de la position de l'arbre en flèche (5).

5. Véhicule de dégivrage selon l'une des revendications précédentes, **caractérisé en ce que**
le bras de pulvérisation présente un bras télescopique (7) qui présente en particulier à l'état replié une longueur qui est plus grande que l'extension longitudinale de la traverse d'extrémité (5c) du bras à flèche (5) et en particulier plus petite que l'extension longitudinale de l'ensemble du bras à flèche (5) mesuré dans le sens de sa traverse principale (5a).

6. Véhicule de dégivrage selon l'une des revendications précédentes, **caractérisé en ce que** le bras de pulvérisation, en particulier le bras télescopique (7) est pivotant par rapport à la cabine de pilotage (6) au moins autour d'un axe de pivotement horizontal (15) qui est plus haut par rapport à l'axe de pivotement (14) entre la cabine de pilotage (6) et le bras à flèche (5) de sorte qu'en position de repos dans laquelle la traverse principale (5a) s'étend sensiblement à l'horizontale au-dessus de la face supérieure de l'unité d'alimentation (3), également le bras de pulvérisation, en particulier le bras télescopique (7) peut s'étendre depuis son point de logement sensiblement à l'horizontale au-dessus de l'unité d'alimentation (3).

7. Véhicule de dégivrage selon l'une des revendications précédentes, **caractérisé en ce que**
le véhicule (1) est un véhicule à essieux multiples et l'axe de pivotement (13) du bras en flèche (5) est positionné entre les essieux par rapport au véhicule (1) observé en vue de dessus.

8. Véhicule de dégivrage selon l'une des revendications précédentes, **caractérisé en ce que** le déport de la traverse principale (5a) et de la traverse d'extrémité (5c) du bras en flèche (5) parallèles entre elles est suffisamment grand pour qu'en position de repos la cabine de pilotage (6) faisant saillie de la traverse d'extrémité (5c), ne dépasse pas au-delà des constructions montées fixement les plus hautes sur la face supérieure de l'unité d'alimentation (3).

9. Véhicule de dégivrage selon l'une des revendications précédentes, **caractérisé en ce que**
le bras de pulvérisation, en particulier le bras télescopique (7), observé en vue de dessus, est fixé sur la cabine de pilotage (6) en décalé latéralement par rapport au bras à flèche (5) de sorte qu'en position de repos, le bras de pulvérisation, en particulier le bras télescopique (7) est positionné en décalé latéralement par rapport à la traverse principale (5a) du bras à flèche (5).
